# EUROPÄISCHE PATENTSCHRIFT

(11) **EP 3 509 820 B1**
(45) Veröffentlichungstag und Bekanntmachung des Hinweises auf die Patenterteilung: **24.11.2021**
(21) Anmeldenummer: 17755186.8
(22) Anmeldetag: 22.08.2017
(51) Int. Cl.: B29C 65/16, G01N 21/59, G01N 21/958

(54) **VERFAHREN FÜR DAS LASERSTRAHL-KUNSTSTOFFSCHWEISSEN SOWIE VORRICHTUNG**
METHOD FOR LASER BEAM PLASTIC WELDING, AND DEVICE
PROCÉDÉ DE SOUDAGE DE MATIÈRES PLASTIQUES PAR FAISCEAU LASER AINSI QUE DISPOSITIF

(30) Priorität: 06.09.2016 DE 102016216844
(43) Veröffentlichungstag der Anmeldung: 17.07.2019
(73) Patentinhaber: Evosys Laser GmbH, 91058 Erlangen (DE)
(72) Erfinder: BRUNNECKER, Frank, 96117 Memmelsdorf (DE)
(74) Vertreter: Dr. Gassner & Partner mbB
(86) Internationale Anmeldenummer: PCT/EP2017/071123
(87) Internationale Veröffentlichungsnummer: WO 2018/046291

(56) Entgegenhaltungen:
- DE-A1-102008 038 014
- JP-A- 2004 243 629
- JP-A- 2009 061 459
- JP-A- 2009 166 115
- US-A1- 2004 150 688

## Beschreibung

Die Erfindung betrifft ein Verfahren für das Laserstrahl-Kunststoffschweißen und eine entsprechende Vorrichtung.

Bei dem an sich bekannten Laserstrahl-Kunststoffschweißen werden zwei aus einem Kunststoffmaterial hergestellte Formteile miteinander verbunden. Ein erstes Formteil absorbiert dabei im Wesentlichen die Laserstrahlung. Ein zweites Formteil ist für die Laserstrahlung im Wesentlichen transparent. Die durch eine Strahlungsquelle erzeugte Strahlung, insbesondere Laserstrahlung, durchdringt das zweite (obere) transparente Formteil und wird von dem ersten (unteren) Formteil absorbiert, das dadurch in einen plastifizierten oder geschmolzenen Zustand gebracht wird. Die beiden Formteile werden in diesem Zustand durch eine Halterung fixiert. Durch Wärmeleitung wird auch das transparente zweite Formteil an einer Kontaktfläche zwischen den beiden Formteilen lokal plastifiziert oder aufgeschmolzen. Unter der Wirkung des durch die Halterung erzeugten Drucks entsteht eine Verbindung zwischen den beiden Formteilen.

Das Dokument JP 2009 061459 A offenbart ein Verfahren für das Laserstrahl-Kunststoffschweißen, mit den folgenden Schritten: Anordnen eines für Laserstrahlung im Wesentlichen transparenten ersten Formteils auf einer Aufnahme, Bestrahlen des ersten Formteils mit einer elektromagnetischen Strahlungsquelle, Erfassen der Erwärmung des ersten Formteils mittels eines Detektors, Erstellen eines Transmissionsprofils des ersten Formteils, Anordnen des ersten Formteils auf einem Laserstrahlung im Wesentlichen absorbierenden zweiten Formteil, und Bestrahlen der beiden Formteile entlang der Kontur einer zu erstellenden Schweißnaht mit einem Bearbeitungslaser derart, dass der durch den Bearbeitungslaser erzeugte Energieeintrag durch eine Steuerungseinrichtung in Abhängigkeit des erstellten Absorptionsprofils des ersten Formteils gesteuert wird.

In der US 2004/0150688 A1 wird vorgeschlagen, bei einem mittels Laserlicht zu verschweißenden Bauteil an der geplanten Schweißstelle die Transmission für Laserlicht vor dem Laserschweißvorgang zu messen.

Bei einem aus der JP 2004 243629 A bekannten Laserschweißverfahren wird die Transmissivität des zu verschweißenden Bauteils mittels eines Detektors gemessen und die Ausgangsleistung der Laserlichtquelle dementsprechend geregelt.

In ähnlicher Weise sieht auch die JP 2009 166115 A vor, dass vor dem Verschweißen eines für Laserlicht durchlässigen Objekts und eines Laserlicht absorbierenden Objekts eine Messung der Transmission vorgenommen wird.

Um eine qualitativ einwandfreie Schweißverbindung herzustellen, ist es erforderlich, die eingesetzte Strahlleistung genau zu dosieren. Die für den Schweißprozess zur Verfügung stehende Energie ist von der Transmission des transparenten Formteils abhängig. In der US 7,245,378 B2 ist daher bereits vorgeschlagen worden, die Transmission eines transparenten Formteils vorder Durchführung eines Laserschweißvorgangs zu erfassen. Ein ähnliches Verfahren schlägt auch die DE 10 2008 038 014 A1 vor.

In der Praxis unterliegen bestimmte Eigenschaften des Laserstrahlung im Wesentlichen absorbierenden Formteils Schwankungen, wodurch die Qualität der Schweißverbindung beeinflusst werden kann. Beispiele dafür sind Anspritzpunkte bei spritzgegossenen Formteilen, an denen eine Anhäufung von Glasfasern vorliegen kann. Weitere Einflussfaktoren sind beispielsweise der Rußgehalt eines eingefärbten Kunststoffs, der Gehalt eines entsprechenden Absorberzusatzes oder die Wasseraufnahme bei Kunststoffen wie Polyamid oder die Konditionierung. Es wurde auch beobachtet, dass verschiedene Chargen des für das Spritzgießen verwendeten Kunststoffgranulats Schwankungen unterliegen. Zudem kann die Absorption durch die Temperaturführung während des Spritzgießprozesses stark beeinflusst werden.

Der Erfindung liegt daher die Aufgabe zu Grunde, ein Verfahren für das Laserstrahl-Kunststoffschweißen anzugeben, das auch bei schwankenden Eigenschaften der für das Formteil verwendeten Werkstoffe eine zuverlässige Herstellung der Schweißverbindung ermöglicht.

Zur Lösung dieser Aufgabe ist ein Verfahren für das Laserstrahl-Kunststoffschweißen mit den folgenden Schritten vorgesehen:
Anordnen eines Laserstrahlung im Wesentlichen absorbierenden ersten Formteils auf einer Aufnahme,
Bestrahlen des ersten Formteils mit einer elektromagnetischen Strahlungsquelle,
Erfassen der Erwärmung des ersten Formteils mittels eines Detektors,
Erstellen eines Absorptionsprofils des ersten Formteils,
Anordnen eines für Laserstrahlung im Wesentlichen transparenten zweiten Formteils auf dem ersten Formteil, und
Bestrahlen der beiden Formteile entlang der Kontur einer zu erstellenden Schweißnaht mit einem Bearbeitungslaser derart, dass der durch den Bearbeitungslaser erzeugte Energieeintrag durch eine Steuerungseinrichtung in Abhängigkeit des erstellten Absorptionsprofils des ersten Formteils gesteuert wird.

Die Erfindung beruht auf der Erkenntnis, dass eine zuverlässige Schweißverbindung erhalten werden kann, indem das Absorptionsverhalten des Formteils erfasst und berücksichtigt wird, das die Laserstrahlung im Wesentlichen absorbiert. Im Gegensatz zu herkömmlichen Verfahren, bei denen die Transmission des (oberen) Formteils erfasst wird, ist erfindungsgemäß vorgesehen, das untere, die Laserstrahlung absorbierende Formteil hinsichtlich seines Absorptionsgrads zu erfassen. Durch die Erfassung der Absorption kann der nachfolgende Schweißvorgang so beeinflusst werden, dass die in die Fügezone eingebrachte Energie ausreicht, um das untere Formteil zu plastifizieren oder lokal zu schmelzen. Andererseits ist die eingebrachte Energie nicht so hoch, dass es zu einer lokalen Überhitzung und einer Werkstoffschädigung kommt. Demnach kann die für den Schweißvorgang eingebrachte Energie erfindungsgemäß exakt passend dosiert werden.

Das erfindungsgemäße Verfahren sieht somit vor, dass zunächst lediglich das die Laserstrahlung im Wesentlichen absorbierende erste Formteil auf einer Aufnahme angeordnet wird. Anschließend wird lediglich dieses erste Formteil bestrahlt und dessen Erwärmung mittels eines Detektors erfasst. Anhand dieser Messdaten wird ein Absorptionsprofil des ersten Formteils erstellt. Anschließend wird das transparente zweite Formteil auf dem ersten Formteil angeordnet und vorzugsweise mittels einer Halterung fixiert, so dass die beiden Formteile durch eine Druckkraft gehalten werden. Anschließend erfolgt die Bestrahlung mittels des Bearbeitungslasers, wobei der Energieeintrag anhand des erstellten Absorptionsprofils des ersten Formteils gesteuert wird.

Bei dem erfindungsgemäßen Verfahren wird es bevorzugt, dass an den Stellen des ersten Formteils, die eine höhere Absorption aufweisen, der Energieeintrag beim Bestrahlen mit dem Bearbeitungslaser durch die Steuerungseinrichtung verringert wird. Der Begriff "höhere Absorption" kann sich beispielsweise auf einen Mittelwert der Absorption des ersten Formteils beziehen. Sofern lokal eine höhere Absorption im Vergleich zu dem Mittelwert vorhanden ist, wird der Energieeintragung dort lokal verringert. Anstelle eines Mittelwerts kann auch ein Schwellwert der Absorption als Bezugsgröße gewählt werden.

In ähnlicher Weise kann es bei dem erfindungsgemäßen Verfahren vorgesehen sein, dass an Stellen des ersten Formteils, die eine geringere Absorption im Vergleich zu dem Mittelwert aufweisen, der Energieeintrag beim Bestrahlen mit dem Bearbeitungslaser durch eine Steuerungseinrichtung vergrößert wird. Der Begriff "geringere Absorption" kann sich entweder auf einen Mittelwert der Absorption oder einen festgelegten Schwellwert beziehen. Dementsprechend wird der Energieeintrag beim Bestrahlen mit dem Bearbeitungslaser in Anhängigkeit der lokalen Absorption, die sich aus dem erstellten Absorptionsprofil des ersten Formteils ergibt, gesteuert. Das erstellte Absorptionsprofil gibt einen Zusammenhang zwischen einer Position entlang der Kontur einer zu erstellenden Schweißnaht und der an dieser Stelle erfassten Absorption an.

Eine bevorzugte Ausgestaltung des erfindungsgemäßen Verfahrens sieht vor, dass das erste Formteil zum Erstellen des Absorptionsprofils mittels des Bearbeitungslasers bestrahlt wird. Dadurch ergibt sich der Vorteil, dass lediglich ein einziger Bearbeitungslaser als Strahlungsquelle benötigt wird. Grundsätzlich ist es auch denkbar, eine erste Laserstrahlquelle zum Erstellen des Absorptionsprofils und eine zweite Laserstrahlquelle als Bearbeitungslaser einzusetzen.

Bei dem erfindungsgemäßen Verfahren wird es bevorzugt, dass das erste Formteil zum Erstellen des Absorptionsprofils entlang eines festgelegten Wegs bestrahlt und das Absorptionsprofil entlang des Wegs erfasst wird. Der Laserstrahl legt dabei den festgelegten Weg zurück. Wie bereits erläutert, gibt das Absorptionsprofil den Zusammenhang zwischen der lokalen Absorption des Laserstrahlung im Wesentlichen absorbierenden Formteils entlang der Kontur der zu erstellenden Schweißnaht an. Vorzugsweise wird das Absorptionsprofil somit entlang der Kontur der zu erstellenden Schweißnaht erfasst.

Eine Weiterbildung des erfindungsgemäßen Verfahrens sieht vor, dass ein Pyrometer oder eine Infrarotkamera als Detektor verwendet wird. Mittels eines Pyrometers kann die Temperatur eines Punkts des Formteils erfasst werden. Mittels einer Infrarotkamera kann ein zweidimensionales Bild der Absorption einer Fläche des Formteils erstellt werden.

Vorzugsweise wird bei dem erfindungsgemäßen Verfahren ein Bearbeitungslaser mit einer Wellenlänge zwischen 600 nm und 2.500 nm verwendet. Besonders bevorzugt wird dabei ein Bearbeitungslaser im nahen Infrarot, der beispielsweise eine Wellenlänge von 980 nm besitzt.

Bei dem erfindungsgemäßen Verfahren kann es auch vorgesehen sein, dass ein an einer Bewegungseinrichtung angebrachter Bearbeitungslaser verwendet wird, wobei die Bewegungseinrichtung als x-y-Achssystem, als Roboter oder als Galvanometerscanner ausgebildet ist. Mittels der Bewegungseinrichtung wird der daran angebrachte Bearbeitungslaser so bewegt, dass die Kontur der zu erstellenden Schweißnaht von der elektromagnetischen Strahlungsquelle bestrahlt wird.

Eine weitere Variante des erfindungsgemäßen Verfahrens sieht vor, dass ein Transmissionsprofil des transparenten zweiten Formteils erstellt und der durch den Bearbeitungslaser erzeugte Energieeintrag auch in Abhängigkeit des erstellten Transmissionsprofils des zweiten Formteils gesteuert wird. Die Erstellung des Transmissionsprofils ist jedoch optional. Es ist möglich, die Transmission des transparenten Formteils so zu messen wie die Absorption des absorbierenden Formteils. Dazu wird auch das transparente Formteil mit dem Bearbeitungslaser bestrahlt und dadurch erwärmt. Die meisten technischen Kunststoffe, die für transparente Formteile genutzt werden, weisen eine Absorption im Bereich von 2 bis 40 % auf. Dementsprechend erwärmt sich das transparente Formteil bei einer Bestrahlung, derselbe Detektor kann die Wärme erfassen und anhand der erfassten Wärme können Rückschlüsse auf die Transmission gezogen werden. Eine stärkere Erwärmung weist beispielsweise auf eine geringere Transmission hin.

Daneben betrifft die Erfindung eine Vorrichtung für das Laserstrahl-Kunststoffschweißen mit einer ersten Aufnahme für ein erstes Formteil, einer elektromagnetischen Strahlungsquelle mit einer Bewegungseinrichtung, einer zweiten Aufnahme für ein auf das erste Formteil aufgesetztes zweites Formteil und einen Detektor zum Erfassen der Erwärmung eines Formteils. Die erfindungsgemäße Vorrichtung ist zur Durchführung des beschriebenen Verfahrens ausgebildet und umfasst eine Steuerungseinrichtung, die mit einer elektromagnetischen Strahlungsquelle und dem Detektor verbunden und dazu ausgebildet ist, die elektromagnetische Strahlungsquelle so zu steuern, dass das erste Formteil bestrahlt und dessen Erwärmung mittels des Detektors erfasst wird und ein Absorptionsprofil des ersten Formteils erstellt wird, wobei nach dem Anordnen des für Laserstrahlung im Wesentlichen transparenten zweiten Formteils auf dem ersten Formteil beide Formteile entlang der Kontur einer zu erstellenden Schweißnaht mit einem Bearbeitungslaser derart bestrahlt werden, dass der durch den Bearbeitungslaser erzeugte Energieeintrag durch die Steuerungseinrichtung in Abhängigkeit des erstellten Absorptionsprofils des ersten Formteils gesteuert wird.

Bei der erfindungsgemäßen Vorrichtung kann es vorgesehen sein, dass sie ein Handhabungsmittel zum Aufnehmen und Aufsetzen des zweiten Formteils auf das erste Formteil aufweist. Das Handhabungsmittel kann beispielsweise als Robotergreifer ausgebildet sein.

Bei der erfindungsgemäßen Vorrichtung ist der Detektor vorzugsweise an derselben Seite wie die elektromagnetische Strahlungsquelle angeordnet.

Weitere Vorteile und Einzelheiten der Erfindung werden nachfolgend anhand von Ausführungsbeispielen und Bezugnahme auf die Zeichnungen erläutert. Die Zeichnungen sind schematische Darstellungen und zeigen:
- Fig. 1: eine Seitenansicht eines Ausführungsbeispiel einer erfindungsgemäßen Vorrichtung,
- Fig. 2: ein Energie-Zeit-Diagramm,
- Fig. 3: ein Diagramm, das die Wärmestrahlung über der Zeit zeigt,
- Fig. 4: die erfindungsgemäße Vorrichtung gemäß Fig. 1 mit zwei Formteilen, und
- Fig. 5: eine Draufsicht auf ein Formteil und den Weg des Laserstrahls.

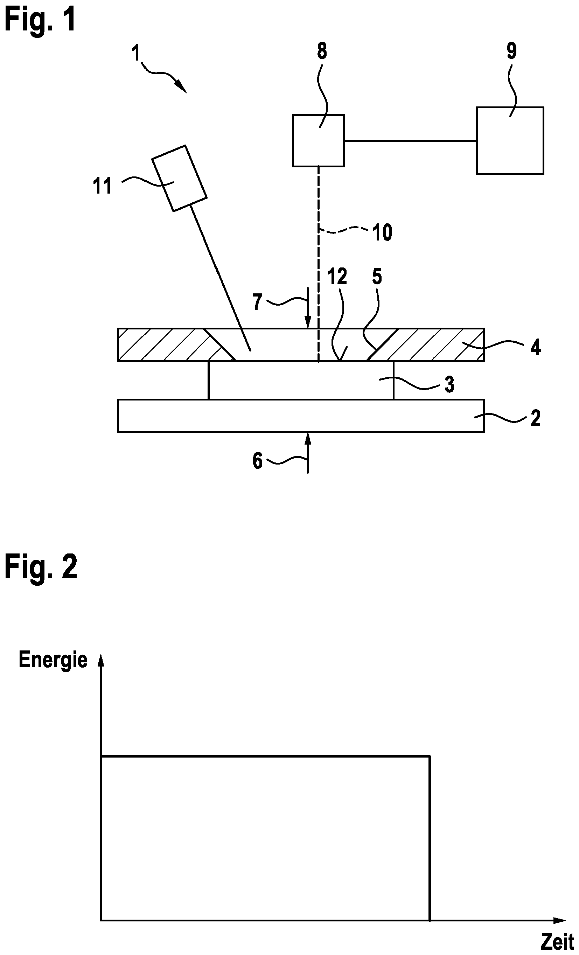

Fig. 1 ist eine Seitenansicht eines Ausführungsbeispiels einer Vorrichtung 1. Die Vorrichtung 1 umfasst eine Aufnahme 2 für ein erstes Formteil 3. Die Aufnahme 2 ist als Spannvorrichtung ausgebildet und wirkt mit einer Halterung 4 zusammen, die mit der Aufnahme 2 die Spannvorrichtung bildet. Die Halterung 4 weist eine Ausnehmung 5 auf, die an die Größe und die Form des ersten Formteils 3 angepasst ist. In Fig. 1 erkennt man, dass das erste Formteil 3 zwischen der Halterung 4 und der Aufnahme 2 aufgenommen und gehalten ist. In diesem Zustand übt die aus der Aufnahme 2 und der Halterung 4 bestehende Spannvorrichtung eine Druckkraft, die durch die beiden Pfeile 6, 7 schematisch dargestellt wird, auf das Formteil 3 aus.

Die Vorrichtung 1 ist für das Laserstrahl-Kunststoffschweißen vorgesehen, bei dem das erste Formteil 3 mit einem zweiten, in Fig. 1 nicht gezeigten, Formteil verbunden wird. Um sicherzustellen, dass beim Schweißvorgang exakt die zum Plastifizieren oder Schmelzen benötigte Energie zugeführt wird, wird das erste Formteil 3 zunächst mit einer als Bearbeitungslaser 8 ausgebildeten Strahlungsquelle bestrahlt. Der Bearbeitungslaser 8 wird durch eine Steuerungseinrichtung 9 derart gesteuert, dass ein Laserstrahl 10 entlang einer festgelegten Kontur auf der Oberfläche des ersten Formteils 3 bewegt wird. Die festgelegte Kontur ist in diesem Ausführungsbeispiel rechteckförmig. Unter der Wirkung des Laserstrahls 10 erwärmt sich die bestrahlte Oberfläche des ersten Formteils 3 in Abhängigkeit der Absorption. Diese Absorption wird mittels eines Detektors 11 erfasst, der in der Nähe des Bearbeitungslasers 8 angeordnet und auf eine Oberfläche 12 des ersten Formteils 3 gerichtet ist. In diesem Ausführungsbeispiel ist der Detektor 11 als Pyrometer ausgebildet. Das Pyrometer ermöglicht eine punktförmige Erfassung der Temperatur der durch den Laserstrahl 10 erwärmten Oberfläche 12.

Fig. 2 ist ein Diagramm, das die durch den Bearbeitungslaser 8 eingebrachte Energie über der Zeit darstellt. In Fig. 2 erkennt man, dass die durch den Bearbeitungslaser 8 erzeugte Einstrahlungsenergie über der Zeit konstant ist.

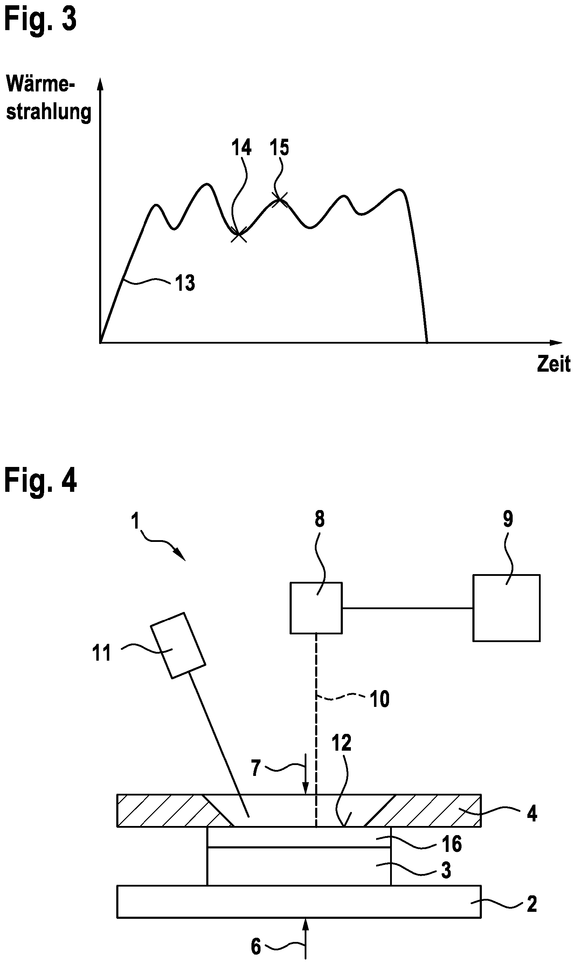

Fig. 3 ist ein Diagramm, das die durch den Detektor 11 erfasste Wärmestrahlung der Oberfläche 12 des bestrahlten ersten Formteils 3 zeigt. Der als Pyrometer ausgebildete Detektor 11 wird durch die Steuerungseinrichtung 9 dem Bearbeitungslaser 8 nachgeführt, so dass die Bewegung des Detektors 11 an die Bewegung des Bearbeitungslasers 8 gekoppelt ist, indem der Detektor 11 dem Bearbeitungslaser 8 nachgeführt wird. Da der Detektor 11 zu verschiedenen Zeitpunkten die Temperatur der Oberfläche 12 des ersten Formteils 3 an unterschiedlichen Stellen misst, gibt das in Fig. 3 gezeigte Diagramm auch die erfasste Wärmestrahlung entlang der von dem Bearbeitungslaser 8 überstrichenen Kontur wieder. Das in Fig. 3 gezeigte Diagramm kann somit nicht nur als Darstellung der Wärmestrahlung über der Zeit, sondern auch als Darstellung der Wärmestrahlung in Relation der bestrahlten Kontur interpretiert werden.

Die in Fig. 3 gezeigte Kurve 13 umfasst einen Punkt 14, an dem die Wärmestrahlung vergleichsweise gering ist. Es handelt sich somit um eine vergleichsweise kalte Stelle. Demnach ist die Absorption an dieser Position gering. Demgegenüber ist die Wärmestrahlung an dem Punkt 15 vergleichsweise hoch. Es handelt sich somit um eine warme Stelle auf der Oberfläche 12 des ersten Formteils 3. Eine warme Stelle bedeutet, dass die Absorption des ersten Formteils 3 hoch ist. Dementsprechend gibt die Kurve 13 die Absorption des ersten Formteils 3 entlang der von dem Bearbeitungslaser 8 überstrichenen Kontur an. Die Kurve 13 stellt somit das Absorptionsprofil des ersten Formteils 3 dar.

Fig. 4 ist eine ähnliche Darstellung wie Fig. 1 und zeigt die Vorrichtung 1 mit der Aufnahme 2, dem ersten Formteil 3 und der Halterung 4. Auf das erste Formteil 3, das Laserstrahlung im Wesentlichen absorbiert, wird ein zweites Formteil 16 gesetzt, das für Laserstrahlung im Wesentlichen transparent ist. Die beiden Formteile 3, 16 sind zwischen der Aufnahme 2 und der Halterung 4 klemmend gehalten. In diesem Ausführungsbeispiel wird die Halterung 4 einerseits zur Erfassung des Absorptionsprofils des ersten Formteils 3 und andererseits zum Verschweißen des ersten und des zweiten Formteils 3, 16 benutzt. Bei anderen Ausführungen können für die Erfassung des Absorptionsprofils und für den späteren Schweißvorgang auch zwei unterschiedliche Halterungen eingesetzt werden.

Der Schweißprozess wird in dem in Fig. 4 gezeigten gespannten bzw. geklemmten Zustand durchgeführt, in dem das erste und das zweite Formteil 3, 16 von einer als Druckkraft ausgebildeten Spannkraft beaufschlagt werden. Mittels des Bearbeitungslasers 8 wird Energie eingebracht, die das für Laserstrahlung im Wesentlichen transparente zweite Formteil 16 passiert und die Oberfläche 12 des darunter angeordneten ersten Formteils 3 soweit erwärmt, bis der Kunststoff plastifiziert. Der Bearbeitungslaser 8 wird währenddessen durch die Steuerungseinrichtung 9 so gesteuert, dass der Laserstrahl 10 entlang der festgelegten Kontur geführt wird. Das erste Formteil 3 schmilzt dabei lokal auf. Durch Wärmeleitung wird auch die Unterseite des zweiten Formteils 16 soweit erwärmt, dass sich die beiden Formteile 3, 16 unter der Wirkung der Spannkraft miteinander verbinden. Der durch den Bearbeitungslaser 8 erzeugte Energieeintrag wird während des Schweißvorgangs durch die Steuerungseinrichtung 9 in Abhängigkeit des in Fig. 3 gezeigten Absorptionsprofils des ersten Formteils 3 gesteuert. An denjenigen Stellen des ersten Formteils 3, die eine höhere Absorption aufweisen, beispielsweise an dem Punkt 15, wird der Energieeintrag beim Bestrahlen mit dem Bearbeitungslaser 8 durch die Steuerungseinrichtung 9 verringert. Andererseits wird an denjenigen Stellen des ersten Formteils 3, die eine geringere Absorption aufweisen, der Energieeintrag beim Bestrahlen mit dem Bearbeitungslaser 8 durch die Steuerungseinrichtung 9 vergrößert. Ein Beispiel dafür ist der Punkt 14, an dem die Absorption niedriger ist.

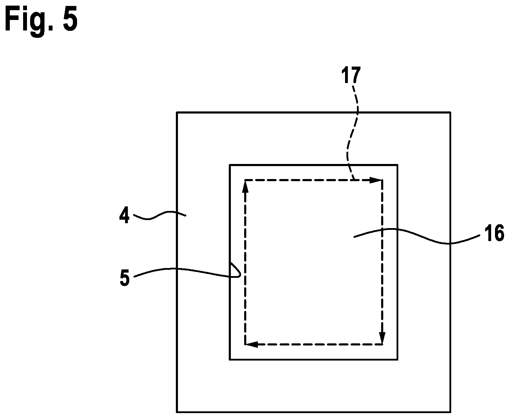

Die Vorrichtung 1 ist für die Serienfertigung von miteinander verschweißten Formteilen aus Kunststoff vorgesehen. Das erste Formteil 3 und das zweite Formteil 16 werden durch ein Handhabungsmittel aufgenommen und platziert. Zunächst wird das erste Formteil 3 mittels des Handhabungsmittels auf die Aufnahme 2 gesetzt, um das Absorptionsprofil zu erstellen. Anschließend wird das zweite Formteil 16 mittels des Handhabungsmittels auf das erste Formteil 3 aufgesetzt. Nach der Durchführung des Schweißvorgangs wird das aus den beiden Formteilen 3, 16 gebildete Bauteil mittels des Handhabungsmittels von der Aufnahme 2 entnommen. Fig. 5 ist eine Draufsicht und zeigt die Halterung 4, die die Ausnehmung 5 aufweist, und das gespannte zweite Formteil 16. Pfeile 17 und gestrichelte Linien zeigen den Weg des Laserstrahls 10 und somit die bestrahlte Kontur des zweiten Formteils 16 an. Man erkennt, dass der Bearbeitungslaser 8 einen rechteckförmigen Weg zurücklegt, wodurch eine rechteckige Schweißnaht gebildet wird.

### Bezugszeichenliste

- 1: Vorrichtung
- 2: Aufnahme
- 3: erstes Formteil
- 4: Halterung
- 5: Ausnehmung
- 6: Pfeil
- 7: Pfeil
- 8: Bearbeitungslaser
- 9: Steuerungseinrichtung
- 10: Laserstrahl
- 11: Detektor
- 12: Oberfläche
- 13: Kurve
- 14: Punkt
- 15: Punkt
- 16: zweites Formteil
- 17: Pfeil

## Patentansprüche

1. Verfahren für das Laserstrahl-Kunststoffschweißen, mit den folgenden Schritten:
Anordnen eines Laserstrahlung im Wesentlichen absorbierenden ersten Formteils (3) auf einer Aufnahme (2),
Bestrahlen des ersten Formteils (3) mit einer elektromagnetischen Strahlungsquelle,
Erfassen der Erwärmung des ersten Formteils (3) mittels eines Detektors (11),
Erstellen eines Absorptionsprofils des ersten Formteils (3),
Anordnen eines für Laserstrahlung im Wesentlichen transparenten zweiten Formteils (16) auf dem ersten Formteil (3), und
Bestrahlen der beiden Formteile (3, 16) entlang der Kontur einer zu erstellenden Schweißnaht mit einem Bearbeitungslaser (8) derart, dass der durch den Bearbeitungslaser (8) erzeugte Energieeintrag durch eine Steuerungseinrichtung (9) in Abhängigkeit des erstellten Absorptionsprofils des ersten Formteils (3) gesteuert wird.

2. Verfahren nach Anspruch 1, **dadurch gekennzeichnet, dass** an Stellen des ersten Formteils (3), die eine höhere Absorption aufweisen, der Energieeintrag beim Bestrahlen mit dem Bearbeitungslaser (8) durch die Steuerungseinrichtung (9) verringert wird.

3. Verfahren nach Anspruch 1 oder 2, **dadurch gekennzeichnet, dass** an Stellen des ersten Formteils (3), die eine geringere Absorption aufweisen, der Energieeintrag beim Bestrahlen mit dem Bearbeitungslaser (8) durch die Steuerungseinrichtung (9) vergrößert wird.

4. Verfahren nach einem der vorangehenden Ansprüche, **dadurch gekennzeichnet, dass** das erste Formteil (3) zum Erstellen des Absorptionsprofils mittels des Bearbeitungslasers (8) bestrahlt wird.

5. Verfahren nach einem der vorangehenden Ansprüche, **dadurch gekennzeichnet, dass** das erste Formteil (3) zum Erstellen des Absorptionsprofils entlang eines festgelegten Wegs bestrahlt und das Absorptionsprofil entlang des Wegs erfasst wird.

6. Verfahren nach Anspruch 5, **dadurch gekennzeichnet, dass** die Kontur der zu erstellenden Schweißnaht als festgelegter Weg zum Erstellen des Absorptionsprofils verwendet wird.

7. Verfahren nach einem der vorangehenden Ansprüche, **dadurch gekennzeichnet, dass** ein Pyrometer oder eine Infrarotkamera als Detektor (11) verwendet wird.

8. Verfahren nach einem der vorangehenden Ansprüche, **dadurch gekennzeichnet, dass** ein Bearbeitungslaser (8) mit einer Wellenlänge zwischen 600 nm und 2.500 nm verwendet wird.

9. Verfahren nach einem der vorangehenden Ansprüche, **dadurch gekennzeichnet, dass** ein an einer Bewegungseinrichtung angebrachter Bearbeitungslaser (8) verwendet wird, wobei die Bewegungseinrichtung als x-y-Achssystem, als Roboter oder als Galvanometerscanner ausgebildet ist.

10. Verfahren nach einem der vorangehenden Ansprüche, **dadurch gekennzeichnet, dass** ein Transmissionsprofil des transparenten zweiten Formteils (16) erstellt und der durch den Bearbeitungslaser (8) erzeugte Energieeintrag auch in Abhängigkeit des erstellten Transmissionsprofils des zweiten Formteils (16) gesteuert wird.

11. Vorrichtung (1) für das Laserstrahl-Kunststoffschweißen mit einer ersten Aufnahme (2) für ein erstes Formteil (3), einer elektromagnetischen Strahlungsquelle mit einer Bewegungseinrichtung, einer zweiten Aufnahme für ein auf das erste Formteil (3) aufgesetztes zweites Formteil (16) und einem Detektor (11) zum Erfassen der Erwärmung eines Formteils (3, 16), **dadurch gekennzeichnet, dass** die Vorrichtung (1) zur Durchführung des Verfahrens nach einem der Ansprüche 1 bis 10 ausgebildet ist, wobei die Vorrichtung (1) eine Steuerungseinrichtung (9) umfasst, die mit der elektromagnetischen Strahlungsquelle und dem Detektor (11) verbunden und dazu ausgebildet ist, die elektromagnetische Strahlungsquelle so zu steuern, dass das erste Formteil (3) bestrahlt und dessen Erwärmung mittels des Detektors (11) erfasst wird und ein Absorptionsprofil des ersten Formteils (3) erstellt wird, wobei nach dem Anordnen des für Laserstrahlung im Wesentlichen transparenten zweiten Formteils (16) auf dem ersten Formteil (3) beide Formteile (3, 16) entlang der Kontur einer zu erstellenden Schweißnaht mit einem Bearbeitungslaser (8) derart bestrahlt werden, dass der durch den Bearbeitungslaser (8) erzeugte Energieeintrag durch die Steuerungseinrichtung (9) in Abhängigkeit des erstellten Absorptionsprofils des ersten Formteils (3) gesteuert wird.

12. Vorrichtung (1) nach Anspruch 11, **dadurch gekennzeichnet, dass** sie ein Handhabungsmittel zum Aufnehmen und Aufsetzen des zweiten Formteils (16) auf das erste Formteil (3) aufweist.

13. Vorrichtung (1) nach Anspruch 11 oder 12, **dadurch gekennzeichnet, dass** der Detektor (11) an derselben Seite wie die elektromagnetische Strahlungsquelle angeordnet ist.

## Claims

1. A method for laser beam plastic welding, having the following steps:
arranging a first mold part (3) which substantially absorbs laser radiation on a receiving area (2),
irradiating the first mold part (3) using an electromagnetic radiation source,
detecting the warming of the first mold part (3) by means of a detector (11),
generating an absorption profile of the first mold part (3),
arranging a second mold part (16) which is substantially transparent to laser radiation on the first mold part (3), and
irradiating the two mold parts (3, 16) along the contour of a welding seam to be produced using a machining laser (8) such that the energy input produced by the machining laser (8) is controlled by a controller (9) on the basis of the generated absorption profile of the first mold part (3).

2. The method according to claim 1, **characterized in that** the energy input in the event of irradiation with the machining laser (8) is reduced by the controller (9) at those points of the first mold part (3) that have a higher absorption.

3. The method according to claim 1 or 2, **characterized in that** the energy input in the event of irradiation with the machining laser (8) is increased by the controller (9) at those points of the first mold part (3) that have a lower absorption.

4. The method according to any one of the preceding claims, **characterized in that** the first mold part (3) is irradiated by means of the machining laser (8) in order to produce the absorption profile.

5. The method according to any one of the preceding claims, **characterized in that** in order to produce the absorption profile the first mold part (3) is irradiated along a defined path, and the absorption profile is detected along the path.

6. The method according to claim 5, **characterized in that** the contour of the welding seam to be produced is used as defined path for producing the absorption profile.

7. The method according to any one of the preceding claims, **characterized in that** a pyrometer or an infrared camera is used as detector (11).

8. The method according to any one of the preceding claims, **characterized in that** a machining laser (8) with a wavelength between 600 nm and 2500 nm is used.

9. The method according to any one of the preceding claims, **characterized in that** a machining laser (8) attached to a movement device is used, wherein the movement device is configured as an x-y axis system, as a robot, or as a galvanometer scanner.

10. The method according to any one of the preceding claims, **characterized in that** a transmission profile of the transparent second mold part (16) is produced and the energy input produced by the machining laser (8) is also controlled on the basis of the produced transmission profile of the second mold part (16).

11. A device (1) for laser beam plastic welding comprising a first receiving area (2) for a first mold part (3), an electromagnetic radiation source with a movement device, a second receiving area for a second mold part (16) placed on the first mold part (3), and a detector (11) for detecting the warming of a mold part (3, 16), **characterized in that** the device (1) is configured to carry out the method according to any one of claims 1 to 10, wherein the device (1) comprises a controller (9) which is connected to the electromagnetic radiation source and the detector (11) and is configured to control the electromagnetic radiation source such that the first mold part (3) is irradiated, the warming thereof is detected by means of the detector (11), and an absorption profile of the first mold part (3) is produced, wherein, once the second mold part (16) substantially transparent to laser radiation is arranged on the first mold part (3), both mold parts (3, 16) are irradiated along the contour of a welding seam to be produced using a machining laser (8), such that the energy input produced by the machining laser (8) is controlled by the controller (9) on the basis of the generated absorption profile of the first mold part (3).

12. The device (1) according to claim 11, **characterized in that** it comprises a handling means for picking up and placing the second mold part (16) on the first mold part (3).

13. The device (1) according to claims 11 or 12, **characterized in that** the detector (11) is arranged on the same side as the electromagnetic radiation source.

## Revendications

1. Procédé de soudage de matières plastiques par faisceau laser, comprenant les étapes suivantes consistant à :
disposer une première pièce moulée (3) sensiblement absorbant un rayonnement laser sur un support (2),
irradier la première pièce moulée (3) au moyen d'une source de rayonnement électromagnétique,
détecter le réchauffement de la première pièce moulée (3) au moyen d'un détecteur (11),
créer un profil d'absorption de la première pièce moulée (3),
disposer une deuxième pièce moulée (16) sensiblement transparente pour le rayonnement laser sur la première pièce moulée (3), et
irradier les deux pièces moulées (3, 16) le long du contour d'une soudure à créer au moyen d'un laser de traitement (8) de sorte que l'apport en énergie généré par le laser de traitement (8) est commandé par un dispositif de commande (9) en fonction du profil d'absorption créé de la première pièce moulée (3).

2. Procédé selon la revendication 1, **caractérisé en ce qu'**aux emplacements de la première pièce moulée (3), qui présentent une absorption plus élevée, l'apport en énergie lors de l'irradiation avec le laser de traitement (8) est réduit par le dispositif de commande (9).

3. Procédé selon la revendication 1 ou 2, **caractérisé en ce qu'**aux emplacements de la première pièce moulée (3), qui présentent une absorption plus faible, l'apport en énergie lors de l'irradiation avec le laser de traitement (8) est augmenté par le dispositif de commande (9).

4. Procédé selon l'une des revendications précédentes, **caractérisé en ce que** la première pièce moulée (3) est irradiée pour créer le profil d'absorption au moyen du laser de traitement (8).

5. Procédé selon l'une des revendications précédentes, **caractérisé en ce que** la première pièce moulée (3) est irradiée pour créer le profil d'absorption le long d'une trajectoire définie et le profil d'absorption le long de la trajectoire est détecté.

6. Procédé selon la revendication 5, **caractérisé en ce que** le contour de la soudure à créer est utilisé comme trajectoire définie pour la création du profil d'absorption.

7. Procédé selon l'une des revendications précédentes, **caractérisé en ce qu'**un pyromètre ou une caméra infrarouge est utilisé comme détecteur (11).

8. Procédé selon l'une des revendications précédentes, **caractérisé en ce qu'**un laser de traitement (8) est utilisé avec une longueur d'onde comprise entre 600 nm et 2500 nm.

9. Procédé selon l'une des revendications précédentes, **caractérisé en ce qu'**un laser de traitement (8) monté sur un dispositif de déplacement est utilisé, **en ce que** le dispositif de déplacement se présente sous forme de système d'axes x-y, de robot ou de scanner galvanométrique.

10. Procédé selon l'une des revendications précédentes, **caractérisé en ce qu'**un profil de transmission de la deuxième pièce moulée (16) transparente est créé et l'apport en énergie généré par le laser de traitement (8) est commandé aussi en fonction du profil de transmission créé de la deuxième pièce moulée (16).

11. Dispositif (1) de soudage de matières plastiques par faisceau laser comprenant un premier support (2) pour une première pièce moulée (3), une source de rayonnement électromagnétique avec un dispositif de déplacement, un deuxième support pour une deuxième pièce moulée (16) placée sur la première pièce moulée (3) et un détecteur (11) servant à détecter le réchauffement d'une pièce moulée (3, 16), **caractérisé en ce que** le dispositif (1) est conçu pour la mise en œuvre du procédé selon l'une des revendications 1 à 10, **en ce que** le dispositif (1) comporte un dispositif de commande (9), qui est relié à la source de rayonnement électromagnétique et au détecteur (11) et est conçu pour commander la source de rayonnement électromagnétique de sorte que la première pièce moulée (3) est irradiée et son réchauffement est détecté au moyen du détecteur (11) et un profil d'absorption de la première pièce moulée (3) est créé, **en ce qu'**après disposition de la deuxième pièce moulée (16) sensiblement transparente pour le rayonnement laser sur la première pièce moulée (3), les deux pièces moulées (3, 16) sont irradiées le long du contour d'une soudure à créer au moyen d'un laser de traitement (8) de sorte que l'apport en énergie généré par le laser de traitement (8) est commandé par le dispositif de commande (9) en fonction du profil d'absorption créé de la première pièce moulée (3).

12. Dispositif (1) selon la revendication 11, caractérisé en qu'il comporte un moyen de maniement pour recevoir et placer la deuxième pièce moulée (16) sur la première pièce moulée (3).

13. Dispositif (1) selon la revendication 11 ou 12, **caractérisé en ce que** le détecteur (11) est disposé du même côté que la source de rayonnement électromagnétique.
